# EUROPEAN PATENT APPLICATION

(11) **EP 4 425 835 A1**
(43) Date of publication of application: **04.09.2024**
(21) Application number: 24161032.8
(22) Date of filing: 01.03.2024
(51) Int. Cl.: H04L 9/40, H04L 9/00, H04L 9/32

(54) **SYSTEM AND METHOD FOR SECURE APPROVAL OF OPERATIONS REQUESTED BY A DEVICE MANAGEMENT SYSTEM**

(30) Priority: 03.03.2023 US 202318117209
(71) Applicant: Semtech Corporation, Camarillo CA 93012-8790 (US)
(72) Inventor: SANGOI, Manuel, 82000 Montauban (FR); CHEN, Zhuan, Surrey, V4A 9V3 (CA); CANNENTERRE, Gilles, 31170 Tournefeuille (FR); VERMILLARD, Julien, 31660 Buzet sur Tarn (FR); LOCKE, Roderick, Vancouver, V6R 3S4 (CA); CARTWRIGHT, Warren, Vancouver, V6H 1A4 (CA)
(74) Representative: Penza, Giancarlo

(57) **Abstract**

There is provided a system and method for secure approval of operations requested by a device management system. The system includes a managed device configured to provide wireless device access, the managed device having information indicative of an authorization key associated therewith and a management module configured to manage access to the managed device, the management module configured to communicate with a signatory module. The system further includes a signatory module configured to receive an authorization request associated with the operation, the signatory module further configured to enable authorization of the operation through the association of the authorization key with the operation. Upon receipt of an authorized operation request that includes information indicative of the operation and the authorization key, the managed device responsive to the authorized operation request upon verification of the authorization key.

## Description

### FIELD

The present invention pertains to the field of wireless communication and in particular to a system and method for secure approval of operations requested by a device management system, the operations to be performed by a managed device.

### BACKGROUND

Remote access to systems is used in a variety of circumstances. For example, remote access to company network or remote access to operational systems for manufacturing and the like. A non-limiting and exemplary example of such a remote access control, consider a supervisory control and data acquisition (SCADA) which is a control system architecture that can include computers, networked data communications and graphical user interfaces for high level supervision of machines and processes. This concept also covers sensors and other devices, such as programmable logic controllers, which may interface with process plants or machinery. The SCADA concept was developed to be a universal means of remote access to a variety of local control modules, which could be from different manufacturers and allowing access through standard automation protocols. In practice, large SCADA systems have grown to become very similar to distributed control systems in function, while using multiple means of interfacing with the plant. A SCADA system may control large-scale processes that can include multiple sites, and work over large distances as well as small distances. SCADA is also a commonly used type of industrial control system, in spite of concerns about SCADA systems being vulnerable to cyberwarfare/cyberterrorism attacks. For example, a SCADA system may be supported via a public or cloud-based communication system which may include cellular routers.

A problem of public or cloud-based management solutions which include the use of cellular routers or other managed devices can be based on the cellular routers or managed devices being considered not secure enough for high-risk assets. Access by unauthorized third parties to the management system can compromise the management environment and can compromise the whole solution, by allowing an attacker to compromise the managed devices by pushing an insecure configuration to the devices. These types of security problems are typically solved by providing an on-premises (e.g., within a secured environment without external access) management solution that the user of the management system operates, thereby controlling or limiting access to management system by undesired entities which may include external attackers and supplier of the management system itself.

Accordingly, there may be a need for a system and method for secure approval of operations requested by a device management system that is not subject to one or more limitations of the prior art.

This background information is intended to provide information that may be of possible relevance to the present invention. No admission is necessarily intended, nor should be construed, that any of the preceding information constitutes prior art against the present invention.

### SUMMARY

It is an object of the present disclosure to obviate or mitigate at least one disadvantage of the prior art. According to an aspect there is provided a system and method for secure approval of operations requested by a device management system.

According to an aspect of the present disclosure, there is provided a system for secure approval of an operation requested by a device management system. The system includes a managed device having information indicative of an authorization key and a management module configured to manage operations performed by the managed device, the management module configured to communicate with a signatory module. The signatory module is configured to receive an operation request associated with the operation, wherein the signatory module is further configured to enable authorization of the operation request through the association of the authorization key with the operation request and generate an authorized operation request. Upon receipt and verification of the authorized operation request by the managed device, the managed device is responsive to the authorized operation request.

According to an aspect of the present disclosure, there is provided a method for secure approval of an operation requested by a device management system. The method includes receiving, by a management module, an operation request associated with an operation to be performed and transmitting, by the management module to a signatory module, the operation request associated with the operation. The method further includes receiving, by the management module from the signatory module, an authorized operation response, the authorized operation response including information indicative of the operation and an authorization key. The method further includes transmitting, by the management module to a managed device, the authorized operation request that includes information indicative of the operation and the authorization key, the managed device responsive to the authorized operation request upon verification of the authorized operation request.

In some embodiments, the method further includes performing a revocation status check prior to verification of the authorized operation request. In some embodiments, the method further includes receiving a certificate chain associated with the authorization key. In some embodiments, the method further includes storing the authorization key and the certificate chain. In some embodiments, the authorization key and the certificate chain are stored on one or more a smart card, a universal serial bus (USB) stick, a dongle and a YubiKey.

According to an aspect of the present disclosure, there is provided an apparatus including a processor and a non-transient memory. The memory storing instructions that when executed by the processor cause the apparatus to be configured to perform one or more of the methods further discussed herein.

Embodiments have been described above in conjunction with aspects of the present invention upon which they can be implemented. Those skilled in the art will appreciate that embodiments may be implemented in conjunction with the aspect with which they are described but may also be implemented with other embodiments of that aspect. When embodiments are mutually exclusive, or are otherwise incompatible with each other, it will be apparent to those skilled in the art. Some embodiments may be described in relation to one aspect, but may also be applicable to other aspects, as will be apparent to those of skill in the art.

### BRIEF DESCRIPTION OF THE FIGURES

Further features and advantages of the present invention will become apparent from the following detailed description, taken in combination with the appended drawings, in which:
FIG. 1 illustrates a system for secure approval of a requested operation implement in an operational environment, according to embodiments.
FIG. 2 illustrates a method for secure approval of operations requested by a device management system, according to embodiments.
FIG. 3 illustrates a block diagram associated with a user machine located at the system user's premise that can be used for the signing or authorization of an operation, according to embodiments.
FIG. 4 illustrates a block diagram of a public key infrastructure (PKI) based message signing system, according to embodiments.
FIG. 5 illustrates an example method for signing a requested operation and verifying a signed requested operation, according to embodiments.
FIG. 6 illustrates an example method for user certificate enrollment, according to embodiments.
FIG. 7 illustrates an example method for signing a requested operation for authorization and verification thereof, according to embodiments.
FIG. 8 illustrates an example when a user certificate or signature is revoked, according to embodiments.
FIG. 9 is a schematic diagram of an electronic device according to embodiments.

### DETAILED DESCRIPTION

According to embodiments, there is provided a system for secure approval of operations requested by a device management system. The system includes a managed device, for example a wireless or cellular gateway or router or other cellular or non-cellular managed device (or other device, which is managed by the management system and is capable of performing operations instructed by the management system). The system further includes a management module and a signatory module which provide a secure environment, which can be controlled by an authorized system user to enable the use of a public wireless communication, for example cloud based, management solution, which can be used for high-risk devices.

According to some embodiments, the system includes a managed device having information indicative of an authorization key associated therewith and a management module configured to manage operations performed by the managed device, the management module configured to communicate with a signatory module. The system further includes a signatory module configured to receive an authorization request associated with the operation, the signatory module further configured to enable authorization of the operation through the association of the authorization key with the operation. Upon receipt and verification of an authorized operation request (that may include information indicative of the operation and/or information indicative of the authorization key), the managed device is responsive to the authorized operation request upon verification.

According to embodiments, information indicative of the authorization key can be one or more of a root certificate, password, passcode or other authorization information that can be representative of the authorization key as would be readily understood. Moreover, the information indicative of the authorization key may be further protected by encryption, a hash or other security mechanism or method as would be readily understood.

It will be readily understood that while a managed device is used to define the device that verifies the signed or authorized request associated with the operation, other formats of devices may at least equally be considered to be a managed device. It is understood that a cellular/non-cellular gateway/router is a non-limiting exemplary example of a suitable device, while other devices with a capability of verifying an authorized request for an operation may also be considered a managed device. For example, a computing device can be considered a managed device, provided that this computing device is configured for communication with the management module and the signatory module.

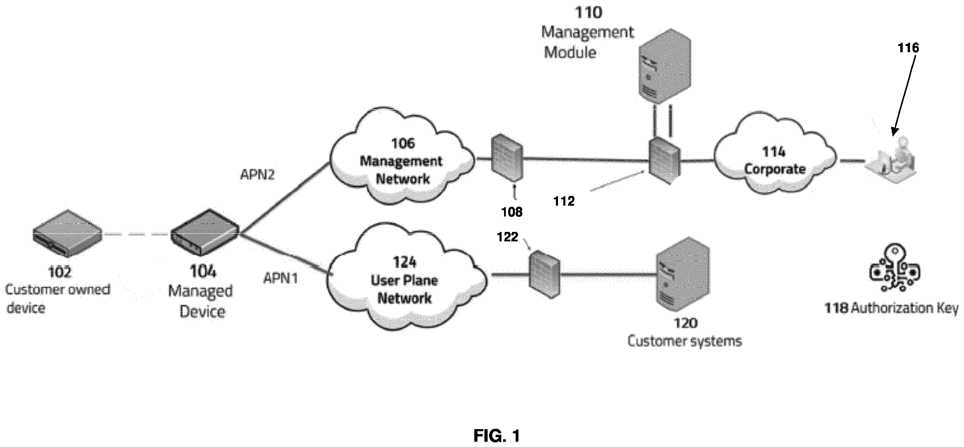

FIG. 1 illustrates a system for secure approval of a requested operation implemented in an operational environment, according to embodiments. A customer owned device (e.g., supervisory control and data acquisition (SCADA) which is a control system architecture), device **102** is optionally communicatively connected to a managed device **104** which provides a network path (e.g. an access point name (APN)) for one or more of cellular and non-cellular data connectivity for one or more of a management network **106,** and a user plane network **124.** A first network, for example illustrated as a management network **106** is communicatively connected via a corporate network **114** to an on-premises signing module **116** (e.g. signatory module). The management network **106** may optionally be communicatively connected to the corporate network **114** via a first firewall **108.** In some embodiments, the signatory module can be associated with an authorization key **118,** however other key type signing infrastructures may be used. Communicatively connected to the corporate network **114,** via an optional second firewall **112** is a management module **110** (e.g., AirLink^{™} management service (ALMS)). A second network, for example illustrated as a user plane network **124,** is communicatively connected, via an optional further firewall **122,** to a customer system **120,** which can be optionally associated with the customer-owned device **102.**

According to some embodiments, the managed device **104** is provisioned with an indication of the authorization key (e.g., a system user-supplied certificate) which can be used to authenticate or authorize the performance or actions relating to a requested operation. According to some embodiments, the managed device **104** can be configured to physically and/or logically separate the management data traffic from the customer data traffic, such that if there is an attacker that accesses the management data traffic, the customer data traffic is not exposed. Accordingly, the managed device **104** is further configured to only allow outbound and related management traffic on the management network **106.** As such, the managed device does not allow for listening ports to be associated with the management network **106.** For example, the outbound management traffic may be lightweight machine to machine (LwM2M) traffic, wherein LwM2M is a protocol specific to M2M or internet of things (IoT) type devices. As would be readily understood, the identification of LwM2M traffic is merely an example and other types of communication traffic may be transmitted on the first cellular private network.

According to some embodiments, the optional second firewall **112** associated with the ALMS or management module, is configured to only allow a particular type of communication traffic that is associated with the system set up between the managed device and the corporate network **114,** which is in communication with an on-premises signing module **116** (e.g. signatory module). In some embodiments, the particular type of traffic allowed from the managed device to the ALMS (e.g. management module) can be LwM2M traffic. According to some embodiments, the second firewall **112** associated with the ALMS or management module, is configured to only allow outbound hypertext transfer protocol secure (HTTPS) between the managed device and the ALMS (e.g. management module).

According to some embodiments, the signatory module is configured as an on-premises signing module **116** where an authorized user can use a system user held private key to sign operations to be sent to the managed device. In some embodiments, the signatory module can be integrated or associated with a system user's existing PKI. In some embodiments, this is optional.

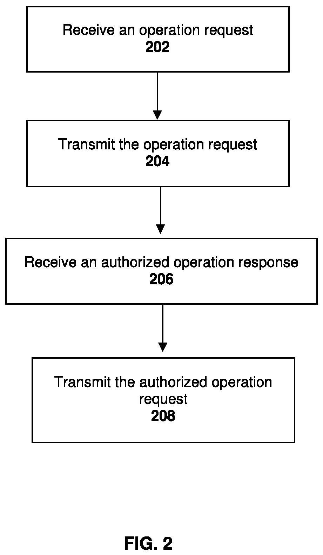

According to embodiments, there is provided a method for secure approval of operations requested by a device management system. With reference to FIG. 2, the method includes receiving **202,** by a management module, an operation request associated with an operation to be performed. An operation request can be initiated by a user on the management module side, received by the management module from a variety of different sources, for example a device requesting a particular action to be performed, a SCADA system operation relating to the operational characteristics of a device being monitored or other source of the operation request. The method further includes transmitting **204,** by the management module to a signatory module, the operation request associated with the operation. The signatory module can be present at the system user location, wherein the signatory module enables an authorized user the ability to authorize the operation, for example by signing the operation using an authorization key. The system user location can be located at the customer's premises and not located together with the management system's network (i.e., away from the management module, managed device etc.). The method further includes, receiving **206,** by the management module from the signatory module, an authorized operation response, the authorized operation response including information indicative of the operation and a proof of authorization (e.g., signatures or passwords etc.). The method additionally includes transmitting **208,** by the management module to a managed device, an authorized operation request that includes information indicative of the operation and the proof of authorization. Upon verification of the authorized operation request, the managed device is responsive to the authorized operation request by conducting or performing the operation that has been authorized.

According to some embodiments the managed device can be associated with AirLink^{™} operating system (OS), which can include features enabling the authentication of authorized operations to be supported locally at the managed device. According to embodiments, an indication of the authentication key is loaded on the managed device to anchor the security associated with the system. According to embodiments, AirLink^{™} OS can support a multi-APN configuration that allows for the separation of the core communication traffic, for example communication traffic that may be associated with the customer system from the management communication traffic for example the communication traffic associated with the authorization of an operation. Functional support for a multi-APN configuration can be dependent on a cellular carrier's capability but can be implemented physically at a device level, for example at a managed device by the provision of multiple radio devices or can be implemented logically at a managed device using a single radio device. Although the above example talks about AirLink^{™} OS with multi-APN configuration and cellular network, a person skilled in art would readily understand that the instant technology can also be applied to non-cellular networks.

According to some embodiments, the management module, for example the ALMS, has capabilities that require all operations initiated in association with the management module to be signed or authorized by authorized system user, wherein the authorized system user is a system user with the appropriate privileges for authorization and the action associated with the authorization are associated with the signature module that is communicatively connected to the management module.

According to some embodiments, an operation can be considered to include one or more of a variety of operations which can be associated with a device management system. An operation can be indicative of a change to be made to a device, for example a router or gateway or other managed device in general. For example, an operation can be a firmware upgrade, configuration changes, reboot, reset to factory default or other operation that may be performed by a device that is being controlled and monitored by the system for secure approval of operations.

According to some embodiments, an operation related to firmware upgrade of a device being managed by the system for secure approval of operations can be performed as follows. Initially a user of the management system selects one or more devices for a firmware upgrade (the desired operation) and subsequently selects an appropriate set of parameters associated with the selected firmware upgrade. The management system triggers a request for the operation (e.g. firmware upgrade) to be approved. An authorized user associated with the signature module reviews the operation and can approve or authorize the operation by way of using a signing function associated with the signature module, namely associating a proof of authorization with the operation, which together may be considered to be an authorized operation request.

According to embodiments, an authorized user can have separate user rights from the management system user that triggered the requested operation. Also, in accordance with embodiments, the authorized user has the ability to inspect the details associated with the requested operation details in order to make the decision regarding approval or rejection of the operation requested.

Upon receipt and verification of an authorized operation request that includes information indicative of the operation and a proof of authorization (e.g., signature or password etc.), the managed device is responsive to the authorized operation request upon verification of the proof of authorization (e.g., signature or password etc.) by the managed device. By being responsive, the managed device is initiating the operation that has been selected, for example a firmware upgrade.

According to some embodiments, the management system can include a signing and auditing feature for management of operations that have been requested. The signing and audit feature can be configured to identify all operations that have been requested and require system user approval. The management module, using for example an authorization user interface, delegates the signature operation to a local authorization device (provided and owned by the system user and associated with the signature module). This local authorization device may be for example a smart card, universal serial bus (USB) stick, dongle, YubiKey or other device that has the ability to store or hold an authorization key. This authorization device can be integrated with a system user-owned PKI environment. The PKI may create a certificate using a public key stored on the authorization device. Further, the authentication key stored on the device may also be used to generate the signature. The authorization UI can provide authorized system users with the ability to see pending, approved and rejected operations. According to embodiments, the ability to authorize operations is a system user right that provides restricted access for specific "approvers", wherein these specific approvers can be selected by the system user or company, for example. In addition, the specific approvers can be individually assigned an authorization key, or group of specific approvers are collectively assigned an authorization key which may be considered a collective authorization key.

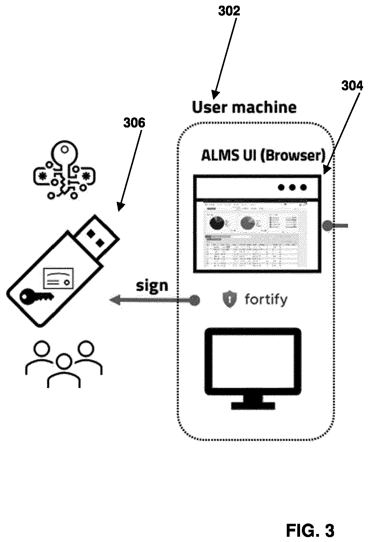

FIG. 3 illustrates a block diagram associated with a user machine located at the system user's premise that can be used for the signing or authorization of an operation, according to embodiments. As illustrated, the user machine **302** can have an authorization Ul **304** (e.g., Air Vantage Ul) associated therewith. The authorization device **306** can be used for the relevant signing or authorization of an operation.

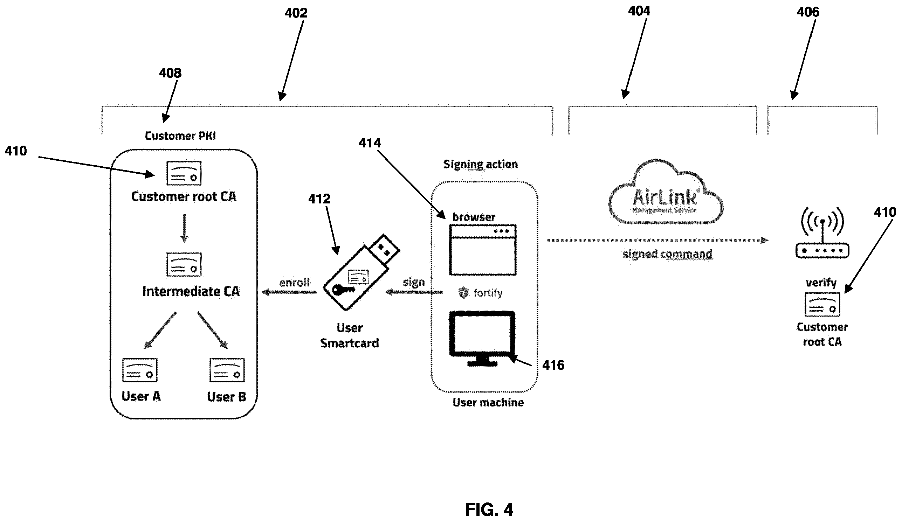

FIG. 4 illustrates a block diagram of a public key infrastructure (PKI) based message signing system, according to embodiments. The signatory module **402** has associated therewith a system user machine **416** which can have an authorization Ul **414** associated therewith and an authorization device **412** which is operative within a secure signature infrastructure **408,** for example a PKI environment. The authorization device **412** will have the authorization key. The secure signature infrastructure **408** can have associated therewith an indication of the authorization key, which is additionally known to the managed device **406** thereby enabling the managed device to identify if an operation has been suitably authorized. In some embodiments, the secure signature infrastructure **408** can also deliver certificate chains to match the public key generated by the authorization device **412** with the identity of the signer. The managed device subsequently performs the operation upon confirmation that the authorization key associated with the operation is verified. The management module **404** provides the suitable connectivity and operational management of the authorization of the operation by the signatory module **402** and provides the suitable authorization response to the managed device **406.**

In some embodiments, the system user provides a suitable PKI environment for the generation and management of certificates. For example, a suitable PKI environment can be a X. 509 PKI environment which for example can use X. 509 certificates. An X. 509 certificate is a digital certificate based on a widely accepted international telecommunications union (ITU) X. 509 standard, which defines the format of public key infrastructure (PKI) certificates. The system can integrate supported local authorization devices, for example smartcards universal serial bus (USB) stick, dongle, YubiKey or other device that has the ability to store or hold an authentication key, for example user certificates for the signing activities.

According to some embodiments, the system user provides a system user-managed PKI environment, which can be based on a standards-based approach using X. 509. This format of a PKI environment can integrate with a certificate authority (CA) to issue entity certificates, following a CA hierarchy. For example, a CA hierarchy can follow a protocol associating a root CA plus an intermediate CA which can be used for end user (e.g. authorized signor) certificates which can be used for signing or authorizing an operation. A registration authority can be used to processes signing requests (for example, when enrolling a new user key). The PKI environment provided by a system user can also provide the verification authority that verifies that a certificate is not revoked (for example through an online certificate status protocol (OCSP) or certificate revocation list (CRL)). It is understood that the managed device and the management module can have access or can be communicatively connected with the PKI environment to enable the managed device to verify the signed or authorized operation thereby enabling the managed device to certify or confirm authorization of the operation prior to acting upon the operation.

According to some embodiments, as the secure signature infrastructure, for example a PKI environment, is managed by the system user, the system user remains in control of the authorization of any operation that is requested using this system. This can provide a level of certainty that there are no third-party issues that may arise from operations being inadvertently requested by a provider or manufacturer of the system. As the system user is located on the customer premises, and the management module is usually not co-located (e.g., the management module can be based in the cloud or at a separate location or the like), this control of authorization of an operation is done by the customers on premises, which can mitigate one or both of privacy and control issues from a third party or the users from the operator of the management module side.

According to some embodiments, a desired operation is converted into a JavaScript object notation (JSON) and further converted to a concise binary object representation (CBOR) format (or other similar formats as would be readily apparent to a person skilled in art) in the signature process. In some embodiments, an initial constraint is that an operation is translated to a single command since only one signature is associated with that operation.

According to some embodiments, as a non-limiting example, there is provided a signature algorithm for AirLink^{™} OS communication protocol. According to embodiments, the signed payload (for example information indicative of the signature and the operation) is decoupled from the payload format used to communicate with the device, for example the managed device. In some embodiments, a canonical version of the request is computed from the JSON format of the operation. When the managed device receives the request, the same format can be computed from the constrained application protocol (CoAP) request to verify the signature.

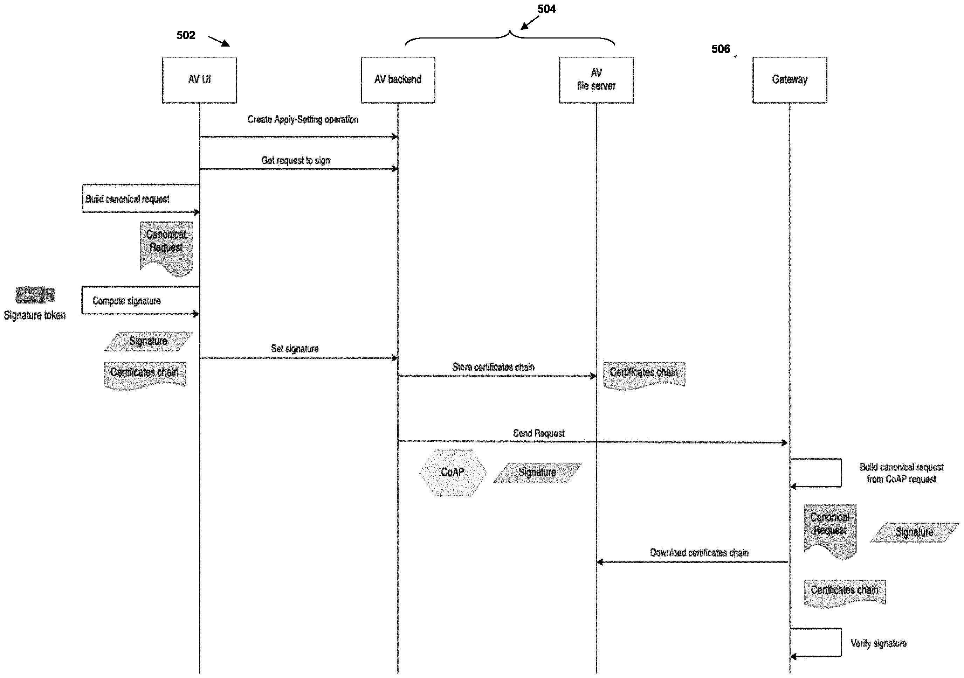

FIG. 5 illustrates an example method for signing a requested operation and verifying a signed requested operation, according to embodiments. Initially, as an example, a create apply-setting operation request is created using an interface **502,** which in this example is an AirVantage^{™} (AV) user interface (it is understood that this may be created by an operator). The AV III **502** of the operator user sends the operation request to the AV backend which can be considered to be part of the management module **504** for this example. The AV UI **502** associated with the authorizer (for example, the particular user that has been assigned authorization credentials) sends a request to the AV backend to sign, which then converts the request to a JSON format and sends it back to the AV UI **502** of the authorizer. The AV UI **502** of the authorizer builds a canonical request and sends it to the signatory module, for example uses the signature functions of the cryptographic token to generate a signature of the canonical request (wherein the signature can be considered to be a proof of authorization). The creation of the signature results in a signature being created together with the identification of the certificate chain. A request to set the signature is sent to the AV backend which stores the certificate chain at the AV file server which in this example is further a portion of the management module **504.** The AV backend sends a request for an operation to the managed device, wherein this request includes the operation which has been converted to a CoAP request together with the signature. The managed device **506** builds a canonical request from the CoAP request which has the associated signature received from the AV backend. The managed device **506** queries the AV file server in order to obtain the certificate chain which upon receipt of the certificate chain enables the managed device to verify the signature that was received from the AV backend together with the CoAP of the operation. Upon verification of the signature, the managed device is subsequently responsive to the operation.

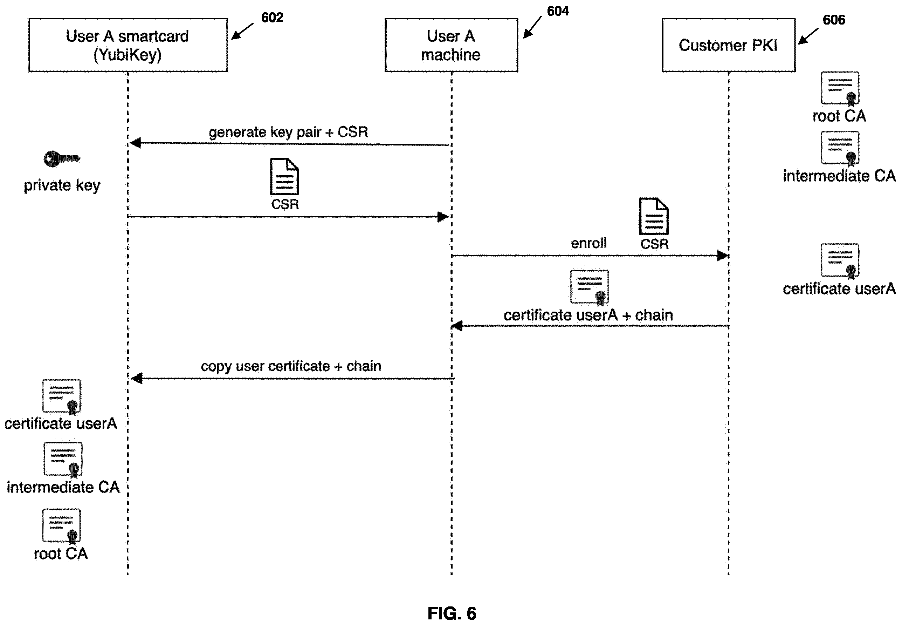

FIG. 6 illustrates an example method for user certificate enrollment, according to embodiments. The enrollment of a particular system user (e.g., authorizer), namely a particular user provided with the authority to sign or authorize an operation, enables the particular user to obtain a certificate associated with that particular user for the subsequent signing of an operation. The user has an operative system user machine **604** and an associated authorization device **602,** which is a YubiKey in this example. Initially, the particular user, via the system user machine **604** sends a request to generate a certificate signing request (CSR) based on a public key that has been generated on the authorization device **602.** A generated CSR is transmitted to the user machine **604** which then transmits an enroll request together with the CSR to the secure signature infrastructure **606,** which in this example is a system user PKI environment. The secure signature infrastructure **606** has associated therewith a root CA key and an intermediate CA key. The root CA key and the intermediate CA key together with information within the CSR, which can at least in part be indicative of the public key, are used to generate a certificate for the particular user, this can be transmitted together with the certificate chain which can include an intermediate CA certificate and a root CA certificate. This certificate for the particular user is then transmitted to the system user machine **604.** The system user machine **604** then sends a copy of the user certificate together with the certificate chain, which includes the intermediate CA certificate and the root CA certificate for storage on the authorization device **602.** The authorization device **602** is now enrolled and ready for use for the signing, namely authorization, of one or more operations by that particular user. It is to be understood that this authorization device **602** would be associated with the particular user for which the certificates were created.

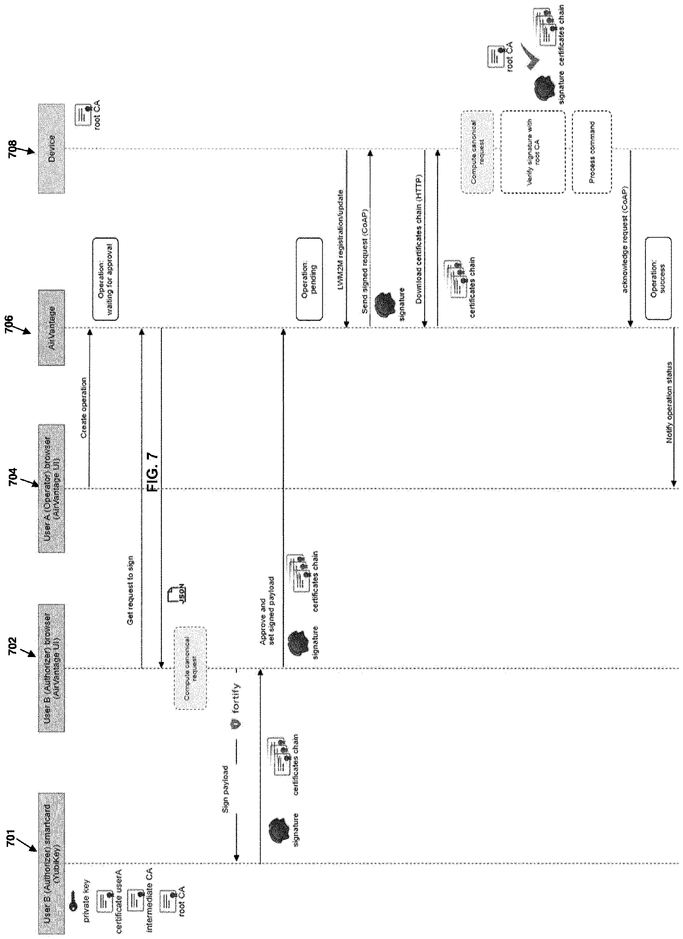

FIG. 7 illustrates an example method for signing a requested operation for authorization and verification thereof, according to embodiments. In this example the user machine **704** (e.g., operator) creates an operation which is to be performed, wherein this request for operation is created in the management module **706.** It can be understood that the system user machine may be used by a variety of users, however it is the authorization device **701** which has been assigned to a particular user **702** (e.g., authorizer) that enables the signing of a requested operation. Upon receipt of the operation request by the management module **706,** the operation is pending approval or authorization. The system user machine **702** further sends a request to get operation payload to sign and the management module **706** converts the operation into JavaScript object notation (JSON) which is sent back to the system user machine **702.** The system user machine **702** queries the authorization device **701,** which has associated therewith a private key, a particular user certificate and a certificate chain that includes an intermediate certificate and a root CA certificate. Following the query from the system user machine **702,** the authorization device **701** subsequently returns the operation, which is already in JSON format, together with the signature and/or the certificate chain, which together form a signed document, to the system user machine **702.** The authorized or signed operation is sent to the management module **706,** which includes the signature and/or the certificate chain. The operation remains pending at the management module **706,** and when a device **708,** for example a managed device, communicates with the management module, the management module **706** sends the authorized or signed operation, which includes the operation in a CBOR format together with the signature and/or an indication to get the certificate chain , to the device **708.** The indication to get the certificate chain may be a hypertext transfer protocol (http) link to download the certificate chains. The device **708** may download the certificate chains from the management module **706.** Using the root CA certificate on the device, together with the certificate chain, the device is capable of verifying the signature that is associated with the operation in a JSON format. Upon verification, the device **708** is responsive to the operation and sends an acknowledgement to the management module **706** resulting a message being sent to the system user machine **704** regarding the success of the operation.

For the example discussed in relation to FIG. 7, the device can be managed device or other device. The device can be configured as machine to machine (M2M) or internet of things (IoT) type devices which may communicate using a lightweight machine to machine (LwM2M) protocol. It is understood that the device has thereon or known thereto a root CA certificate which provides the device with a means for at least in part verification of a signature associated with the requested operation.

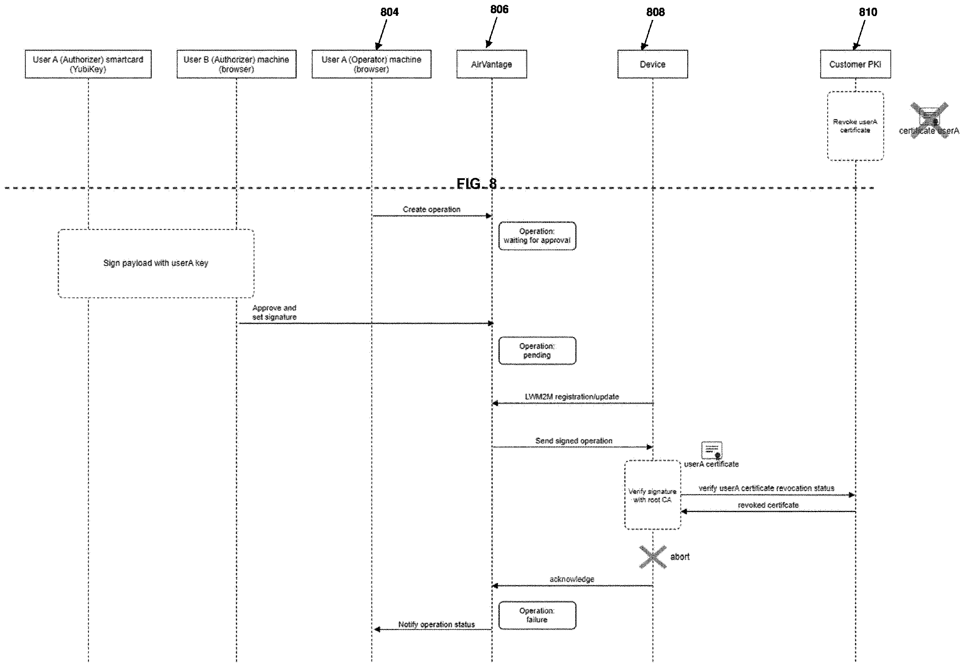

FIG. 8 illustrates an example method when a user certificate or signature is revoked, according to embodiments. In this example the secure signature infrastructure, for example the system user PKI environment, revokes a certificate of a particular user. When a certificate is revoked, the method for signing a requested operation for authorization and verification thereof is similar to that as discussed above with respect to FIG. 7, with differences to be discussed. It will be readily understood that even if a certificate remains valid, the following process or method will be performed during the verification process in order to ensure the validity of the certificate used to sign or authorize the operation.

According to embodiments and as initially discussed above with respect to FIG. 7, when a device **808,** for example a managed device, communicates with the management module **806,** the management module **806** sends the authorized or signed operation, which includes the operation in a CBOR format together with the signature and/or an indication to get the certificate chain, to the device **808.** The indication to get the certificate chain may be a http link to download the certificate chain. Using the root CA certificate on the device, together with the certificate chain, the device is capable of verifying the signature that is associated with the operation in a JSON format. This verification process further identifies the particular user's certificate. A request for the revocation status of the particular user's certificate can be transmitted to the secure signature infrastructure, for example the PKI environment **810.** The secure signature infrastructure subsequently sends a status of the particular user's certificate. In the case illustrated in FIG. 8, the response from the secure signature infrastructure indicates a revoked certificate. In response to the revoked certificate response, the device **808** aborts further tasks relating to the authorized operation and sends an acknowledgement of operation failure to the management module **806** resulting a message being sent to the user machine **804** regarding the failure of the operation. In this manner, the secure signature infrastructure which is provided by the system user, can ensure that the suitable certificates or signatures remain valid for enabling confirmation of an authorized operation in advance of performing the operation.

According to embodiments, a system user has full control over their environment, without risk that the management system vendor can influence their devices. The integration of the system with a customer centric or operated secure signature infrastructure, for example a PKI environment, to control the end-to-end process, namely authorization of operations performed within the system, can ensure the management system vendor or manufacturer cannot influence or impact the customer's devices associated with the system.

According to some embodiments, cellular devices on a public, cloud-based management system can be remotely managed with reduced risk on improper access through the use of a system configured in accordance with the instant disclosure.

According to some embodiments, an overarching concept of the system of the instant application is to place the customer and/or their authorized agents in control of changes made to operational characteristics of their devices being managed by the system.

According to some embodiments, expanding the scope of the operations managed by the system can include firmware updates (or a change to the managed device which may include one or more of: reboot, changing the communication pattern, forward updated or any operation that requires approval) in addition to device configuration. In some embodiments, the system is configured such that the secure signature infrastructure, for example a PKI environment, used to sign firmware update and/or configuration packages is integrated into the management module itself while continuing to provide customer control over the signing keys, for example certificates.

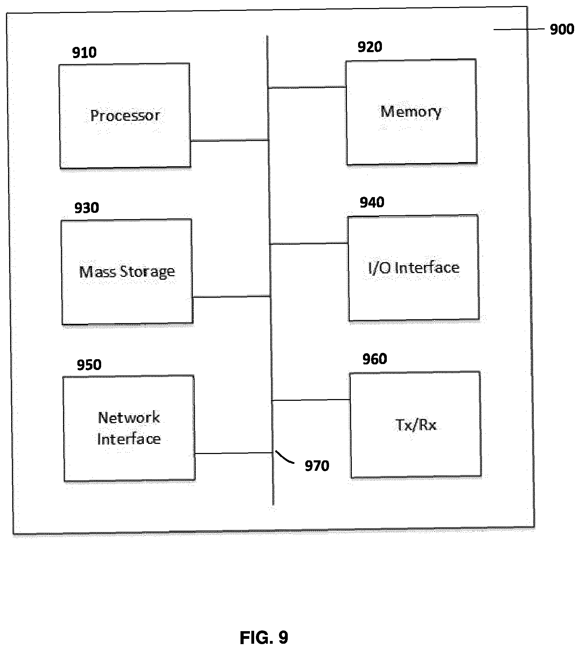

FIG. 9 is a schematic diagram of an electronic device **900** that may perform any or all of the steps of the above methods and features described herein, according to different embodiments of the present invention. For example, one or more of a managed device, a management module and a signatory module may be configured as the electronic device **900.**

As shown, the device includes a processor **910,** memory **920,** non-transitory mass storage **930,** I/O interface **940,** network interface **950,** and a transceiver **960,** all of which are communicatively coupled via bi-directional bus **970.** According to certain embodiments, any or all of the depicted elements may be utilized, or only a subset of the elements. Further, the device **900** may contain multiple instances of certain elements, such as multiple processors, memories, or transceivers. Also, elements of the hardware device may be directly coupled to other elements without the bi-directional bus.

The memory **920** may include any type of non-transitory memory such as static random access memory (SRAM), dynamic random access memory (DRAM), synchronous DRAM (SDRAM), read-only memory (ROM), any combination of such, or the like. The mass storage element **930** may include any type of non-transitory storage device, such as a solid-state drive, hard disk drive, a magnetic disk drive, an optical disk drive, USB drive, or any computer program product configured to store data and machine executable program code. According to certain embodiments, the memory **920** or mass storage **930** may have recorded thereon statements and instructions executable by the processor **910** for performing any of the aforementioned method steps described above.

It will be appreciated that, although specific embodiments of the technology have been described herein for purposes of illustration, various modifications may be made without departing from the scope of the technology. The specification and drawings are, accordingly, to be regarded simply as an illustration of the invention as defined by the appended claims, and are contemplated to cover any and all modifications, variations, combinations or equivalents that fall within the scope of the present invention. In particular, it is within the scope of the technology to provide a computer program product or program element, or a program storage or memory device such as a magnetic or optical wire, tape or disc, or the like, for storing signals readable by a machine, for controlling the operation of a computer according to the method of the technology and/or to structure some or all of its components in accordance with the system of the technology.

According to embodiments, there is provided a system for secure approval of an operation requested by a device management system. The system includes a managed device having information indicative of an authorization key. The system further includes a management module configured to manage operations performed by the managed device, the management module configured to communicate with a signatory module. The signatory module configured to receive an operation request associated with the operation, the signatory module further configured to enable authorization of the operation request through the association of the authorization key with the operation request and generate an authorized operation request. Upon receipt and verification of the authorized operation request by the managed device, the managed device is responsive to the authorized operation request.

According to some embodiments, the authorized operation request includes information indicative of the operation request and a proof of authorization. According to some embodiments, the proof of authorization is one or more of a password and a signature. According to some embodiments, verification of the proof of authorization is performed by the managed device using the information indicative of the authorization key. According to some embodiments, verification of the proof of authorization is performed at least in part using a certificate chain.

According to some embodiments, communication between at least some of the managed device, management module and signatory module is performed using a cellular communication network.

According to some embodiments, the information indicative of an authorization key is one or more of a root certificate authority certificate and a password.

According to some embodiments, the signatory module performs a revocation status check prior to verification of the authorization key.

According to some embodiments, elements of the signatory module are remote to one or more of the management module and the managed device.

According to some embodiments, the information indicative of the authorization key is associated with a public key infrastructure (PKI) environment. According to some embodiments, the PKI environment is a X. 509 environment.

According to some embodiments, the authorization key is stored on one or more of a smart card, a universal serial bus (USB) stick, a dongle and a YubiKey.

According to some embodiments, the authorization key is associated with a particular system user.

According to embodiments, there is provided a method for secure approval of an operation requested by a device management system. The method includes receiving, by a management module, an operation request associated with an operation to be performed and transmitting, by the management module to a signatory module, the operation request associated with the operation. The method further includes receiving, by the management module from the signatory module, an authorized operation response, the authorized operation response including information indicative of the operation and an authorization key. The method additionally includes transmitting, by the management module to a managed device, an authorized operation request that includes information indicative of the operation and the authorization key, the managed device responsive to the authorized operation request upon verification of the authorized operation request.

According to some embodiments, the authorized operation request includes information indicative of the operation request and a proof of authorization. According to some embodiments, the proof of authorization is one or more of a password and a signature.

According to some embodiments, the method further includes performing a revocation status check prior to verification of the authorized operation request.

According to some embodiments, the method further includes receiving a certificate chain associated with the authorization key. According to some embodiments, the method further includes storing the authorization key and the certificate chain. According to some embodiments, the authorization key and the certificate chain are stored on one or more of a smart card, a universal serial bus (USB) stick, a dongle and a YubiKey.

According to embodiments, there is provided an apparatus including a processor and a non-transient memory for storing instructions. The instructions, when executed by the processor cause the apparatus to be configured to receive an operation request associated with an operation to be performed and transmit to a signatory module, the operation request associated with the operation. The instructions when executed by the processor further cause the apparatus to be configured to receive from the signatory module, an authorized operation response, the authorized operation response including information indicative of the operation and an authorization key and transmit to a managed device, the authorized operation request that includes information indicative of the operation and the authorization key, the managed device responsive to the authorized operation request upon verification of the authorized operation request.

According to some embodiments, the instructions when executed by the processor cause the apparatus to be further configured to perform a revocation status check prior to verification of the authorized operation request.

According to some embodiments, the instructions when executed by the processor cause the apparatus to be further configured to receive a certificate chain associated with the authorization key. According to some embodiments, the instructions when executed by the processor cause the apparatus to be further configured to store the authorization key and the certificate chain on one or more of a smart card, a universal serial bus (USB) stick, a dongle and a YubiKey.

Acts associated with the method described herein can be implemented as coded instructions in a computer program product. In other words, the computer program product is a computer-readable medium upon which software code is recorded to execute the method when the computer program product is loaded into memory and executed on the microprocessor of the wireless communication device.

Acts associated with the method described herein can be implemented as coded instructions in plural computer program products. For example, a first portion of the method may be performed using one computing device, and a second portion of the method may be performed using another computing device, server, or the like. In this case, each computer program product is a computer-readable medium upon which software code is recorded to execute appropriate portions of the method when a computer program product is loaded into memory and executed on the microprocessor of a computing device.

Further, each step of the method may be executed on any computing device, such as a personal computer, server, PDA, or the like and pursuant to one or more, or a part of one or more, program elements, modules or objects generated from any programming language, such as C++, Java, or the like. In addition, each step, or a file or object or the like implementing each said step, may be executed by special purpose hardware or a circuit module designed for that purpose.

It is obvious that the foregoing embodiments of the invention are examples and can be varied in many ways. Such present or future variations are not to be regarded as a departure from the spirit and scope of the invention, and all such modifications as would be obvious to one skilled in the art are intended to be included within the scope of the following claims.

## Claims

1. A system for secure approval of an operation requested by a device management system, the system comprising:
a managed device having information indicative of an authorization key;
a management module configured to manage operations performed by the managed device, the management module configured to communicate with a signatory module;
the signatory module configured to receive an operation request associated with the operation, the signatory module further configured to enable authorization of the operation request through the association of the authorization key with the operation request and generate an authorized operation request; and
upon receipt and verification of the authorized operation request by the managed device, the managed device is responsive to the authorized operation request.

2. The system according to claim 1, wherein the authorized operation request includes information indicative of the operation request and a proof of authorization, wherein the proof of authorization is one or more of a password and a signature.

3. The system according to claim 1 or claim 2, wherein communication between at least some of the managed device, management module and signatory module is performed using a cellular communication network.

4. The system according to any one of claims 1 to 3, wherein the information indicative of an authorization key is one or more of a root certificate authority certificate and a password.

5. The system according to claim 2, wherein verification of the proof of authorization is performed by the managed device using the information indicative of the authorization key.

6. The system according to claim 2, wherein verification of the proof of authorization is performed at least in part using a certificate chain.

7. The system according to any one of claims 1 to 6, wherein the signatory module performs a revocation status check prior to verification of the authorization key.

8. The system according to any one of claims 1 to 7, wherein elements of the signatory module is remote to one or more of the management module and the managed device.

9. The system according to any one of claims 1 to 8, wherein the information indicative of the authorization key is associated with a public key infrastructure (PKI) environment.

10. A method for secure approval of an operation requested by a device management system, the method comprising:
receiving, by a management module, an operation request associated with an operation to be performed;
transmitting, by the management module to a signatory module, the operation request associated with the operation;
receiving, by the management module from the signatory module, an authorized operation response, the authorized operation response including information indicative of the operation and an authorization key;
transmitting, by the management module to a managed device, an authorized operation request that includes information indicative of the operation and the authorization key, the managed device responsive to the authorized operation request upon verification of the authorized operation request.

11. The method according to claim 10, wherein the authorized operation request includes information indicative of the operation request and a proof of authorization, wherein the proof of authorization is one or more of a password and a signature.

12. The method according to claim 10 or claim 11, further comprising performing a revocation status check prior to verification of the authorized operation request.

13. The method according to any one of claims 10 to 12, further comprising receiving a certificate chain associated with the authorization key.

14. The method according to claim 13, further comprising storing the authorization key and the certificate chain.

15. An apparatus comprising:
a processor; and
a non-transient memory for storing instructions that when executed by the processor cause the apparatus to be configured to:
receive an operation request associated with an operation to be performed;
transmit to a signatory module, the operation request associated with the operation;
receive from the signatory module, an authorized operation response, the authorized operation response including information indicative of the operation and an authorization key;
transmit to a managed device, the authorized operation request that includes information indicative of the operation and the authorization key, the managed device responsive to the authorized operation request upon verification of the authorized operation request.
